# EUROPEAN PATENT SPECIFICATION

(11) **EP 2 451 569 B1**
(45) Date of publication and mention of the grant of the patent: **20.09.2017**
(21) Application number: 10731501.2
(22) Date of filing: 01.07.2010
(51) Int. Cl.: B01J 13/18, B65D 83/14, C08G 18/00

(54) **Pressurized can comprising leach-proof microcapsules and the method for preparation of such a can**
Druckdose enthaltend auslaugbeständige Mikrokapseln und Herstellungsverfahren einer solchen Druckdose
Boîte sous pression comprenant des microcapsules étanches aux lessivages et procédé de préparation d'une telle boîte sous pression

(30) Priority: 09.07.2009 EP 09165087
(43) Date of publication of application: 16.05.2012
(73) Proprietor: Greenseal Chemicals NV, 9042 Gent (BE)
(72) Inventor: DE SCHRIJVER, Aster, B-9831 Deurle (BE); PAGLIARO, Mario, I-90146 Palermo PA (IT); CIRIMINNA, Rosaria, I-90146 Palermo PA (IT); SCIORTINO, Marzia, I-90046 Monreale PA (IT)
(74) Representative: BiiP cvba
(86) International application number: PCT/EP2010/059383
(87) International publication number: WO 2011/003805

(56) References cited:
- EP-A2- 0 941 761
- WO-A1-03/066209
- WO-A2-2008/002637
- WO-A2-2010/077774
- DE-A1- 2 005 075
- GB-A- 2 416 524
- US-A- 3 839 220
- US-A1- 2004 256 748

## Description

### FIELD OF THE INVENTION

The present disclosure relates to leach-proof organically-modified silica microcapsules containing active molecules and the preparation process thereof. The present invention relates to a pressurized can comprising such microcapsules and catalytically reactive monomers and or oligomers. The microcapsules of the present disclosure burst open upon dispensing out of a pressurized can, thus contacting and reacting the active molecules thus liberated with the monomers and/or oligomers.

### BACKGROUND OF THE INVENTION

Pressurized fluids stored in containers (cans or vessels) are used in a wide field of applications. Sprayable foams are used for several industrial applications as well as by hobbyists. Typical existing sprayable foam formulations are one and two component PU foams (OCF = One Component Foams; TCF = Two Component Foams) in aerosol cans and/or pressure vessels. One well known example of sprayable foam is polyurethane foam. Spray polyurethane foams (SPF) are of particular applicative interest as SPF insulation may be rigid, lightweight, flexible, wind resistant, and effective in extreme temperatures and weather conditions.

In two component foams (TCF), a first polyol/additive/blowing agent mixture and a second NCO/additive/blowing agent mixture are made in separate cans. Both mixtures are blended upon spraying. The extremely reactive reactants can already react in the dispenser channel that thereby gets clogged and must be replaced after each use. A solution has been provided by the One Component Foams (OCF), which, concurrently greatly simplifies the use of foams.

Micro-encapsulation may be most advantageously used to process the OCF. Microcapsules are tiny particles or droplets composed of an active material, such as a catalyst or an initiator, enclosed in a coating or shell. Through micro-encapsulation, the core content is isolated from its surroundings and/or chemical attack and evaporation of the volatile core content is retarded. Micro-encapsulation can also be used to control the rate at which the core material is released from the microcapsule.

Clearly, the 'one-component' approach using the micro-encapsulation of initiators, catalysts and crosslinkers is interesting as it avoids the need for mixing of the reactive components in the dispenser channel upon spraying. The catalysts and the non-cured oligomers or polymers could be safely mixed in the can using the micro-encapsulation process. The reactive components will only react upon dispensing and hence, clogging of the dispenser channel is avoided.

Effective molecular confinement may avoid the need for separation in two or more vessels of mutually incompatible (highly reactive) reactants, with considerable economic savings and comparable enhancement in ease of use and versatility.

Previous technologies commonly used for the encapsulation and fast delivery of active ingredients induced by mechanical forces make use of organic polymers as embedding materials.

US3839220 describes a system for storing active materials comprising a container, a fluid pressurizing medium in said container, and a multiplicity of microcapsules in said container, each of said microcapsules containing a charge consisting essentially of said bursting fluid being present in an amount, and having a vapor pressure such that the pressure inside said microcapsules is not substantially different from the pressure of the fluid medium in said container, but is sufficiently higher than the prevailing outside pressure to cause bursting of said capsules upon their removal from said container. US3839220 refers to encapsulation methods such as the simple and complex coacervation processes, the interfacial polycondensation and the organic phase separation methods, the exchange process and the meltable dispersion process. US3839220 describes that virtually any kind of compound can be encapsulated in any of a number of encapsulating media, by one or more encapsulating processes. By enclosing in the microcapsules a bursting fluid together with the active molecules, and storing the microcapsules in a pressurized can, it is taught that the microcapsules may burst upon dispensing of the content of the can in the ambient. A problem with the microcapsules proposed in this document is that their organic wall is not leach proof for most active component, thus impairing seriously the lifetime of the reactive content of the pressurized can.

A potential alternative to the approach described in US3839220 is based on the sol-gel micro-encapsulation technology described in US6303149. This technology uses inorganic silica to form a silica shell enclosing active molecules. The microcapsules are normally formed by creating an oil-in-water (O/W) emulsion made of the silica sol-gel precursors containing the dissolved active substances, and then mixing said emulsion with an aqueous solution at a suitably selected pH to obtain loaded sol-gel microcapsules in suspension. The method affords 0,01-100 µm sol-gel core-shell microcapsules loaded with up to 80% w/w functional molecules.

US7258874 also discloses sol-gel microcapsules and methods for their preparation and use in controlled release applications. In particular, US7258874 describes the preparation of ceramic particles from reverse micelle solution (water-in-oil, W/O) which is well suited for the entrapment of water-soluble active molecules in silica-based microparticles, wherein the active material is capable of being released from said particles, and the active material in said particles is protected from degradation until release of the active material from the particles.

WO2008/002637 discloses silica microcapsules containing one or more sunscreen agents and dispersing said microcapsules in a sunscreen lotion, to avoid said agents to interact with the other components of the lotion. The microcapsules disclosed in this document, however, are not meant to break and must have sufficient robustness to prevent leakage of the encapsulated sunscreen and to not break upon application of the lotion onto the skin as "sunscreen agent composition[s] can perform their function of screening out harmful UV radiations while they are encapsulated."

As mentioned in the patents described above, the sol-gel encapsulation technique offers the advantage of controlled release of the capsule content. Sol-gel micro-encapsulation further offers the advantage of control of the capsule size and structure as well as properties such as porosity.

The production of controlled release to leach-proof microcapsules constitutes the fundamental requirement for any application of sol-gel entrapped active materials. US7258874 discloses controlled release ceramic particles containing an active material substantially homogeneously dispersed throughout the particles, wherein the active material is capable of being released with time from said particles. Figure 3 of US7258874 shows that the release rate of a dye from the microcapsules decreases with the increasing amount of of methyltrimethoxysilane (MTMS), i.e., with the degree of alkylation of the microcapsules walls. However, significant and long-lasting leaching still occurs even from the microcapsules with the the highest degree of alkylation.

Silicon alkoxides and organically modified alkoxides, such as tetramethylorthosilicate (TMOS) and methyltrimethoxysilane (MTMS) are good solvents for numerous hydrophobic molecules. This property is used to load the dissolved molecules or substances in the subsequent sol-gel hydrolysis-condensation polymer of the monomer solvent. US6303149 for example describes the mixing of silicon alkoxides with silicon esters containing a non-hydrolyzable monomer, such as tri- or dialkoxysilanes

GB2416524 and WO03/066209 disclose an organosilica microcapsule for enclosing active molecules, preferably obtained from a tetraalkoxy silane. The shell of the microcapsule may be breakable under application of shear, as would occur upon smearing a sun lotion or other cosmetic composition on the skin. In a preferred embodiment, the microcapsules should inhibit diffusion or leaching of the active material contained therein, for example sunscreen. For applications wherein diffusion of the active compound out of the shell should occur in a controlled manner, the authors suggest to to adjust the levels of various components, and in particular the level of alkyl trialkoxysilane, which can be present up to 25 wt.% (i.e., up to 34 mol.%). All the examples 1-15 of WO03/066209 concern encapsulated sunscreening agents using tetraethoxy silane (TEOS) with no alkyl silane as expected from the teaching of said document, since with sunscreen agents, as little diffusion out of the microcapsules as possible is required.

For sunscreen lotions, a little diffusion of the sunscreen agents out of the microcapsules is undoubtly unwanted, but the consequences thereof are not dramatic, yielding only a slight to moderate decrease of sun protection. In case of catalytically reactive components, however, the slightest diffusion of an encapsulated active agent (e.g., a catalyst or an initiator), would trigger upon contact with the other components of the composition, a reaction which may be much more problematic than a slight loss of sun protection degree. It was observed that for such systems, the silica microcapsules available to date were not sufficiently leach proof to allow the long term storage in a pressurized can of a catalytically reactive composition.

At present, no solution has been provided to produce entirely leach-proof capsules suspended in a solvent system containing highly reactive molecules. In the prior art described above, the release of the microcapsule content is not controlled to the moment of dispensing. Leaching of the content from the microcapsules inside the container still occurs and early reaction mechanisms may be catalyzed. As the shelf-life of the foam is hereby decreased, this unwanted process of early release of microcapsule content is to be avoided.

None of the reports describing sol-gel microcapsules in the prior art addresses the bursting of the microcapsule by pressure drop. The findings of US630314 concern microcapsules that have been used in the field of cosmetics as carriers for sunscreening agents as described in the review article from Jain et al International Journal of Cosmetic Science 32 (2010) 89 - 98, or for dermatological medical applications as carriers of anti-acne benzoyl peroxide crystals, where the entrapped benzoyl peroxide molecules are slowly released mostly by the action of sebaceous oil secreted by the patient's skin as described in M. Pagliaro, Silica-Based Materials for Advanced Chemical Applications (RSC Publishing, 2009).

Given the above drawbacks of existing microcapsules suitable for catalytic applications, it is a main object of the present invention to provide optimized microcapsules for containing hydrophobic active molecules with a very low to nearly nil diffusion rate out of the shell and at the same time suitable for bursting open upon dispensing out of a pressurized container. The present invention is a key finding to underpin these developments.

It is a particular object of the invention to provide substantially leach-proof capsules and microcapsules which increase the shelf-life of the product formulated with said capsule. The use of leach-proof capsules of the present invention, avoids the highly reactive molecules to slowly disperse through the capsule wall and react with the catalyst before being exposed to a pressure drop, hence making it possible its use in all sort of one-pot dispensing solutions. The terms "substantially leach proof" and "leach proof" are here to be considered as synonyms and construed as follows. Microcapsules containing an active molecule are suspended in a suspension medium comprising components readily reactive with the enclosed active molecules if brought into contact therewith. The suspension is stored in a pressurized container, at room temperature. Samples of the suspension medium are collected at various intervals and analyzed to detect the presence of active molecules, by methods well known in the art, such as FTIR or liquid chromatography. The microcapsules are considered as being leach-proof if the content of active molecules in the suspension medium after a period of six months is inferior to 3% of the initial content of microencapsuled active molecules. If the measurement of the concentration in the suspension medium is not possible, an alternative method to determine whether a type of microcapsules is leach proof is to measure at room temperature the viscosity of a six-month old suspension medium with a dynamic rotating parallel plate viscosimeter at a shear rate of 1 Hz, and if it is not superior to the initial viscosity (i.e., at t=0) of the suspension by more than 5%, the microcapsules are considered to be leach-proof. The present invention meets the above requirements by providing substantially leach-proof hybrid organic-inorganic oxide microcapsules in accordance with the present invention.

### SUMMARY OF THE INVENTION

The present disclosure is defined in the appended independent claims. Preferred embodiments are defined in the dependent claims. In particular, the present disclosure concerns a substantially leach proof microcapsule containing hydrophobic active molecules, wherein the microcapsule shell breaks upon exposure to a positive pressure drop across the inner and outer sides of the shell, 0 < ΔP = Pᵢₙ-Pₒᵤₜ < 5 bar, wherein Pᵢₙ and Pₒᵤₜ are the pressures in, respectively, out of the microcapsule, wherein the microcapsule shell consists of a partially or fully alkylated organosilica compound, having an alkylation degree comprised between 2 and 100 mol.%, preferably between 5 and 20 mol.%, more preferably between 8 and 15 mol.%.

The present disclosure also concerns a foam precursor composition comprising microcapsules as defined supra. The present invention concerns a pressurized can containing such foam precursor composition.

It also concerns a process for preparing a microcapsule according to any of the preceding claims, comprising the steps of:
(a) dissolving into a solvent (i) the hydrophobic active molecules and (ii) condensable microcapsule components, which comprise between 2 and 25 mol.% of an alkyl silicate molecule;
(b) emulsifying said solution to form an oil in water (O/W) emulsion.
(c) treating the emulsion of step (b) with a condensation catalyst to form leach proof organically modified silica microcapsules enclosing the hydrophobic active molecules.

The present disclosure provides microcapsules which shell is particularly impervious to hydrophobic active materials, allowing their long term storage in a pressurized container dispersed in a composition comprising components highly reactive with the hydrophobic active materials contained therein. Furthermore the microcapsules of the present disclosure are suitable for breaking upon dispensing out of the pressurized container, by exposure to the pressure drop resulting from their release in the ambient. The active molecules contained in the microcapsules can then contact and react with the reactive components of the composition, the contact occurring not before they are out of the container.

### BRIEF DESCRIPTION OF THE DRAWINGS

Fig. 1 represents a SEM image of uniform spherical microparticles made of MTMS/TMOS (10%methyl-modified-silica) doped with 7% w/w BPO. Most particles are integer, with only a few particles broken visibile.
Fig. 2 represents a SEM image of uniform spherical microparticles made of MTMS/TMOS (10%methyl-modified-silica) doped with 7% w/w BPO. The size of the particle is shown.

### DETAILED DESCRIPTION OF THE INVENTION

The present disclosure is directed to substantially leach-proof capsules and microcapsules containing a polymerization catalyst encapsulated inside a core-shell geometry, preferably produced using sol-gel technology, which can be released by rupture of the shell following a pressure drop. Conceptually, the rupture could be achieved by either co-encapsulating a pressurized liquid or a low boiling liquid which will lead to rupture of the shell during depressurization.

The key technological challenge is to design a shell, totally impermeable, strong enough to handle the various processes for the production of the cans and temperature gradient during storage but which can break upon a relatively modest pressure drop of at most 5 bar, preferably at most 3 bar, more preferably at most 1 bar, and most preferably, at most 0.5 or even 0.3 bar.

The influence of the alkyl-alkoxide residues in the catalytic behaviour of ORMOSIL (organically modified silicates) is crucial. Scientific testing performed by DRIFT spectral analysis allows concluding that along with TMOS the presence of the co-precursor MTMS (methyltrimethoxysilane) affects the structure and the hydrophilic/lipophilic balance (HLB) of the sol-gel material. Namely, a modification with 25 mol.%, preferably 20 mol.% and more preferably 10 mol.% of MTMS imparts a significant increase in the material's lipophilicity as well as in the porosity and surface area without major structural changes in the molecular silica network. The present disclosure shows that for hydrophobic active molecules, a certain degree of alkylation of the microcapsule shell allows to substantially increase its imperviousness to the active compound.

According to the present disclosure, however, it has surprisingly been found that alkylation of the silica shell of the order of, between 2 and 25 mol.%, preferably between 5 and 20 mol.%, allows to ensure concomitantly, on the one hand, a high affinity between the structure of the sol-gel organosilica matrix and that of the small hydrophobic active molecules and, on the other hand, low to nil diffusion of the confined active molecules into the lipophilic external environment of solvent system, such as those typically employed in spray polyurethane foam formulations.

According to the present disclosure also complete (i.e. 100 mol.%) alkylation of the silica shell affords leach-proof organosilica core/shell microcapsules. These findings are unexpected as the teachings of US7258874 and WO03/066209 indicate that consistent and long-lasting leaching still occurs from alkylated microcapsules, and the teaching of GB2416524, in line with the former two documents, indicates that alkylation of the shell results in increased release rate of the entrapped active molecules.

It is thus possible to mix e.g., an encapsulated catalyst with the reactants in a single vessel without triggering any reaction. The leach-proof nature of the microcapsule is due to the organic modification of the silica network through the employment of alkyl-modified silicon co-precursors in the sol-gel process. Modest alkylation, of the order of 2 to 25 mol.%, preferably 2 to 20 mol.% and more preferably 2 to 10 mol.%, is optimal to ensure full retention of the entrapped active molecules in the presence of a lipophilic solvent. With a degree of alkylation of the shell of less than 2 mol.%, the imperviousness decreases substantially, and for degrees of alkylation greater than 25 mol.%, the formation of microcapsules becomes more difficult and requires the employment of amino-propyl silicon alkoxides functioning as emulsifying agent and catalyst, as detailed below.

According to the present disclosure, the microcapsule is an organosilica capsule and has a core-shell structure. The shell is processed from a silicon source. The expression "silicon source" as used herein, refers to a compound of formula R4-xSi(L)x wherein R is an alkyl, an aryl or an alkyl-aryl such as a benzyl, L is independently Cl, Br, l or OR' wherein R' is an alkyl or benzyl and x is an integer of 1 to 3. The "silicon source" is selected so as to be able to form a network of Si-O-Si bonds. Organosilica bonds have the capability to act as bonding intermediates and to form polymers with useful properties such as impermeability to water, flexibility and resistance to chemical attack.

In a preferred embodiment, the hydrophilic/lipophilic balance (HLB) of the microcapsules as defined in Fidalgo et al. Chemistry of Materials 17 (2005) 6686 is maximum 0.1. MTMS content is responsible for a gradual lipophilicity increase, and therefore for a decrease in the HLB.

In another embodiment, the microcapsules are fully alkylated organosilica particles obtained following the approach described in B. Fei et al. Chemistry Letters 35 (2006) 622, through self-catalytic sol-gel reaction of an alkyl-modified silane such as MTMS and an aminopropyl-modified silane such as 3-aminopropyl trimethoxysilane (ATMS) at oil/water interface without surfactant or other mediating reagents.

The capsule preferably contains active material under pressure. More preferably, at least one catalyst or initiator is entrapped in the microcapsule. Typically, the catalyst or active material is a compound poorly soluble in water, such as benzoyl peroxide (BPO).

The present disclosure further concerns a process for preparing a microcapsule. The process for preparing a microcapsule according the disclosure comprises the steps of dissolving the hydrophobic active molecules into a solution, comprising a silica source, preferably under pressure, the step of emulsifying said solution, preferably with water or with another hydrolytic solvent to form an oil in water (O/W) emulsion, the step of treating said emulsion with a condensation catalyst, to form microcapsules loaded with the active molecules, and it further comprises the step of dispersing the resulting loaded capsules in a mixture of monomers/oligomers within a pressurized vessel. The microcapsule preferably is a sol-gel capsule. The hydrophobic active material may be a catalyst or an initiator and may be mixed with a mixture of alkyl- and alkoxi-silanes with or without a solvent. This organic phase or oil is emulsified in an appropriate aqueous or water phase using an appropriate surfactant. This results in the formation of capsules with an impermeable shell containing, in their core, the catalyst, which may be dissolved in a co-solvent. Alternatively, the hydrophobic active molecule is not dissolved in a co-solvent.

Preferably, preparation of the microcapsule is performed under pressure. The capsules can be introduced in a can with a pressurized liquid or carrier, such as LPG (liquefied petroleum gas). Entrapment of BPO may occur. At least part of the overall content goes inside the forming microcapsules exactly because the incipient microparticles are highly lipophilic, even at 25%, at 20% and even more at 10 mol.% degree of alkylation.

The capsules containing the active molecules and optionally a liquefied gas such as LPG are then transported under pressure in a pressurized vessel containing also the monomers. During spraying, a relatively modest pressure drop of the order of 0.3 to 5 bar, preferably 0.5 to 2 bar, more preferably 0.5 to 1 bar is sufficient to lead to the rupture of the shell, which results in instant release of the active molecules and polymerization of the monomer into a foam.

Concerning the actual entrapment of BPO, at least part of the overall content may enter the forming microcapsule exactly because such incipient microparticles are highly lipophilic at 100 mol.% and preferably at 25 mol.%, at 20 mol.% and also at 10 mol.% and down to 2 mol.% alkylation.

In another preferred embodiment, microencapsulation is carried out in a low boiling solvent. The loaded capsules are dispersed in a solvent such as LPG containing the monomers in a pressurized vessel. The preparation of microcapsules according to this embodiment is conducted at low temperature whereby the volatility is reduced. The process is conducted under refrigeration and the temperature is precisely controlled until the particles have been loaded into the pressurized cans. The thermal expansion coefficient of the liquid, the mechanical property of the shell and the pressure inside the can are carefully adjusted to avoid rupture of the capsule prior to spraying. Upon dispensing at ambient pressure the composition comprising the pressurized capsules out of the pressurized vessel, the capsules burst due to the fast evaporation of the low boiling solvent and release their content which induces polymerization of the monomers.

Even when the aim of microencapsulation according to the present disclosure is the isolation of the core content from its surrounding, the wall must be ruptured at the time of use. Many walls are ruptured easily by pressure or shear stress. In other systems, the wall is broken by solvent action, enzyme attack, chemical reaction, hydrolysis, or slow disintegration. The main challenge in this field is to provide microcapsules which are both leach proof and breakable upon exposition to a moderate pressure drop.

In a preferred embodiment, the force activating the release mechanism for the leach-proof capsules is a modest pressure drop of the order of 0.3 to 5 bar, preferably 0.5 to 2 bar, more preferably 0.5 to 1 bar, acting upon dispensing the product out of a pressurized vessel into ambient at atmospheric pressure that breaks the capsule shell causing release of the entrapped active molecules.

The present disclosure also provides a foam composition comprising said microcapsules. The present invention provides a pressurized can containing said foam composition.

Most applications of sol-gel entrapped materials to heterogeneous catalysis fail because the shell materials are not satisfactorily leach-proof. Inside the vessel containing extremely reactive molecules such as those used for polyurethane foam formation, leaching above 1 wt.% of the entrapped active molecules would be enough to catalyze the polymerization reaction, and thus making one component foam compositions unpractical and non commercializable.

The present disclosure provides entirely leach-proof microcapsules containing hydrophobic active molecules and suitable for contacting external reactants under slight pressure difference conditions.

According to the present disclosure, it has been found that minor alkylation of the silica shell, preferably between 2 and 25 mol%, preferably between 5 and 20 mol.%, more preferably between 8 and 15 mol.%, is enough to ensure a high affinity between the structure of the organosilica matrix and the hydrophobic active molecules, thus avoiding diffusion of the latter out of the shell in spite of the porosity thereof. Modest alkylation is thus enough to prevent leaching of the active material out of the microcapsule.

According to another finding of the present disclosure, complete alkylation of the silica shell may ensure a high affinity between the structure of the organosilica matrix and the hydrophobic active molecules.

According to the present disclosure, the microcapsule is an organosilica capsule and has a metal based shell. Preferably the metal based microcapsule shell comprises at least one monomer selected from metal alkoxides, semi-metal alkoxides, metal esters, semi-metal esters and from monomers of the formula M(R)n (P)m, wherein M is a metallic or semi metallic element, R is a hydrolyzable substituent, n is an integer from 2 to 6, P is a non polymerizable substituent and m is and integer from 0 to 6. More preferably, the shell is processed from a silicon source. The expression "silicon source" as used herein, refers to a compound of formula R4-xSi(L)x wherein R is an alkyl, an aryl or an alkyl-aryl such as a benzyl, L is independently Cl, Br, I or OR' wherein R' is an alkyl or benzyl and x is an integer of 1 to 3. The "silicon source" is selected so as to be able to form a network of Si-O-Si bonds. Organosilica bonds have the capability to act as bonding intermediates and to form polymers with useful properties such as impermeability to water, flexibility and resistance to chemical attack.

In one preferred embodiment, the "alkylation source" is a silicon alkyl-alkoxyde such as monoalkyl-trialkoxy silane, or a dialkyl-dialkoxy silane. In a further preferred embodiment, the silicon alkyl-alkoxyde is a mixture of monoalkyl-trialkoxy silane, and dialkyl-dialkoxy silane. In another preferred embodiment, the mixture of monoalkyl-trialkoxy silane and dialkyl-dialkoxy silane further comprises trialkyl-alkoxy silane. The alkyl-alkoxysilane is preferably mixed in the desired proportions with a tetraalkoxy silane. In alternative embodiments provided, the alkyl and alkoxy residue of the silicon alkoxyde are independently linear or branched and comprising at least 1 carbon atom, preferably 1 to 6 carbon, more preferably 1 to 3 carbon atoms and and even more preferably 1 carbon atom. In one embodiment, the silicon alkyl-alkoxyde is methyltrimethoxy silane. In a preferred embodiment, the hydrophilic/lipophilic balance (HLB) of the microcapsules is maximum 0.1.

The capsule preferably contains active material under pressure. More preferably, at least one catalyst or an initiator is entrapped in the microcapsule. Typically, the catalyst or active material is a hydrophobic compound poorly soluble in water, such as BPO.

In a preferred embodiment of the present disclosure, under appropriate choice of the reaction conditions, said product is in the form of a suspension containing about 1 to 60 wt.% solids consisting of spherical particles of 0.1-10 micrometer. The physical form of the product particles can be controlled, affording capsules and microcapsules of sol-gel derived material containing the loaded molecule with spherical shape. The capsules and microcapsules obtained by this process may accordingly be easily incorporated in various carriers such as sprays.

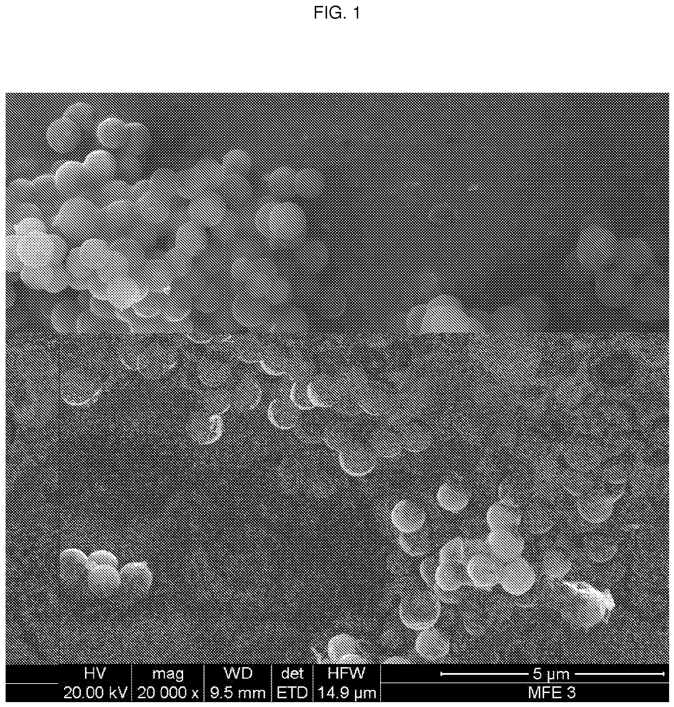

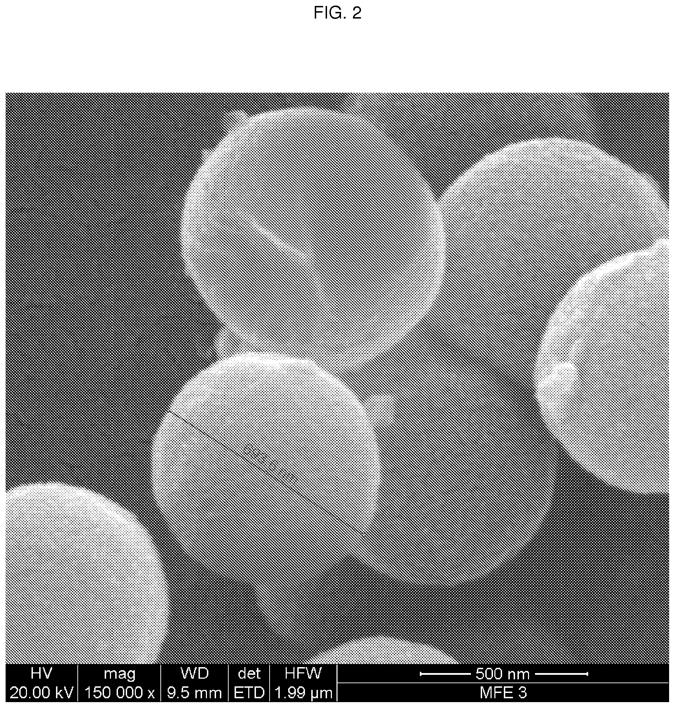

Figures 1 and 2 show spherical microcapsules according to the present invention made of MRMS/TEOS containing BPO. It can be seen in Figure 2 that the microcapsules have a diameter < 1 µm.

In a preferred embodiment, the present invention relates to the use of a substantially leach-proof active-containing organosilica microcapsule to form preferably adhesives, sealants and foams.

The present disclosure further discloses a process for preparing leach-proof doped microcapsules by sol-gel micro-encapsulation from oil-in-water microemulsions. In one aspect, it is provided a process for preparing such microcapsule comprising: i) creating an oil-in-water emulsion by emulsification of a water insoluble solution comprising the precursors as a silicon source, an alkylation source as well as hydrophobic active molecules to be loaded with an hydrolytic solvent; ii) mixing and stirring said emulsion with an aqueous solution at a selected pH to obtain loaded microparticles of 0.01-100 micrometer; and iii) the resulting particles are isolated and rinsed under pressure through cycles of filtration and re-suspension in deionized water or by any other means known in the art.

Preferably, the active molecule (e.g., a catalyst) is mixed with a mixture of alkoxide, alkoxi-silane, and alkyl silane with or without a solvent. This organic phase or oil is emulsified in an appropriate aqueous or water phase using an appropriate surfactant as template. This results in the formation of capsules with an impermeable shell containing, in their core, the catalyst, which may be dissolved in a co-solvent. Alternatively, the catalyst is not dissolved in a co-solvent. High loads of up to 95 wt.% functional molecules are easily achieved in sol-gel capsules.

In one aspect, the sol-gel precursors is a silicone alkoxide and alkyl-alkoxide monomers, or a partially hydrolyzed and partially condensed polymer thereof, or a mixture thereof. The functional molecules and substances can be initiators, catalysts or co-catalysts that can be used in inducing the polymerization reaction. The functional molecules are either dissolved in the silicone alkoxide and alkyl-alkoxide monomers such as tetramethylorthosilicate (TMOS), tetraethoxyorthosilicate (TEOS), methyltrimethoxysilane (MTMS), which are known to be excellent solvents for numerous hydrophobic molecules and substances, or even suspended in the sol-gel precursors.

In another embodiment hollow organosilica spherical microparticles of uniform size and shell thickness doped with a hydrophobic active molecule such as a catalyst are prepared by an extension of the method mentioned above using an alcohol such as ethanol in the oil-in-water emulsion as suggested in Teng et al. Microporous and Mesoporous Materials 127 (2010) 67-72. The mixture of water and ethanol helps to improve stability of the silicon alkoxide(s) oil droplets and thus the monodispersity of the resulting hollow silica spheres compared to the conventional oil-in-water emulsion approach.

The porous capsules thereby obtained can be introduced for example in a can charged with a pressurized liquid or carrier, such as LPG (liquefied petroleum gas). Being mesoporous and having huge surface area (typically several hundreds m²/g), the microparticles are permeable to the solvent which slowly accesses the shell through said pores until pressure inside the core equals the external pressure. Yet, the capsules do not release their content due to the high affinity between the entrapped lipophilic molecules and the surface of the alkyl-modified silica shell.

This is shown by the results of leaching tests carried out with particles such as those in Figures 1 and 2 where uniform hollow methylsilica spheres doped with BPO with huge surface areas (900 m² g⁻¹) and size (diameter) around 700 nm are displayed.

During spraying, a relatively modest pressure drop of the order of preferably 0.3 to 2 bar or more preferably between 0.5 and 1 bar is sufficient to cause rupture of the organosilica shell, which results in instant release of the catalyst and almost immediate polymerization of the monomer(s) to form a foam.

In another preferred embodiment, microencapsulation is carried out in a low boiling solvent. The loaded capsules are dispersed in a solvent such as LPG containing the monomers in a pressurized vessel. The preparation of microcapsules according to this embodiment is conducted at low temperature whereby the volatility is reduced. The process is conducted under refrigeration and the temperature is precisely controlled until the particles have been loaded in the pressurized cans. The thermal expansion coefficient of the liquid, the mechanical property of the shell and the pressure inside the can are carefully adjusted to avoid rupture of the capsule prior to spraying. Upon dispensing at ambient pressure the vessel's content containing the pressurized capsules, the capsules burst due to the fast evaporation of the low boiling solvent and release their content which induces polymerization of the monomers.

The hydrolytic solvent for use in the present disclosure is a solvent or a mixture of solvents favouring formation of -Si-O-Si- bonds from hydrolysis of the silicon source. Examples of such a solvent include aqueous solvents, such as a mixture of water and an inorganic acid such as HCl, H₃PO₄, H₂SO₄ HNO₃. When an acid such as HCl is used, from about 10⁻⁴ to about 10⁻² mole equivalents of H⁺ can be used (based on the molar amount of the silicon alkoxyde).

The present disclosure allows to catalyze a reaction selected from all sort of polymerization reactions, comprising an active-containing organosilica microcapsule, in which one or more reactants enter into said catalytic reaction and whereby said reaction comprises breaking the shell of the active-containing organosilica microcapsule and fast release of its content, allowing a product resulting from said catalytic reaction.

Condensation catalysts are know in the art and can be for example NaOH, HCl, KOH, NH₄OH, Ca(OH)₂, NaF, KF, TBAF, TBAOH, TMAOH. Typically about 0.01 to about 0.09 mole equivalents of the condensation catalyst, such as NaOH, can be used (based on the molar amount of the silicon alkoxyde).

In a preferred embodiment, it is provided a BPO-containing organosilica micro-capsule.

In one embodiment, it is provided a process for preparing a organosilica microcapsule containing a catalyst under pressure, comprising i) mixing a silicon source with an hydrolytic solvent in a pressurized environment; ii) adding the catalyst; iii) treating the mixture of step ii) with a condensation catalyst and iv) mix the resulting microcapsules with a solution of monomer/oligomers also kept under pressure.

In a preferred embodiment, the present disclosure relates to the use of an active-containing organosilica micro-capsule (such as BPO-containing organosilica catalyst) to conduct a catalytic polymerization reaction such as to create a foam, an adhesive or a sealant.

In a preferred embodiment, the force activating the release mechanism for the leach-proof capsules is a modest pressure drop, 0 < ΔP = Pᵢₙ - Pₒᵤₜ < 5 bar, wherein Pᵢₙ and Pₒᵤₜ are the pressures in, respectively, out of the microcapsule, preferably the pressure drop required for breaking the shell of the microcapsules is not more than 1 bar, more preferably, not more than 0.5 bar, acting upon dispensing the product at ambient pressure that breaks the capsule shell causing release of the entrapped active molecules. Preferably, the release mechanism according to the present invention may be used in coatings, adhesives, sealants and/or foams.

The present disclosure also provides a foam composition comprising said microcapsules. The present invention provides a pressurized can containing said foam composition. Various initiators, catalysts, and crosslinkers are commercially used to polymerize different unsaturated oligomers and various isocyanate and novel non-isocyanate monomers to form polyurethane polymers, used as adhesives, sealants and foams.

### EXAMPLES

The following examples clarify and demonstrate the present invention. They are not under any circumstances exclusive and do not intend to limit the scope of the present invention.

### EXAMPLE 1 (ACCORDING TO THE PRESENT INVENTION) BPO in MTMS/TEOS organosilica microcapsules

The synthesis of hollow mesoporous silica spheres was achieved by the ammonia-catalyzed hydrolysis and condensation of tetraethyl orthosilicate (TEOS) and methyl trimethoxysilane (MTMS) in mixed ethanol-water solvents by using CTAB as surfactant. Typically, a mixture of 125 ml of deionized water, 75 ml of ethanol, 1.5 ml of cetyltrimethylammonium bromide (CTAB) and 2.5 ml of ammonia solution (25 wt% NH₃ in water) was emulsified by stirring at 700 rpm at room temperature. Then a solution made by 8.2 ml of TEOS, 1.2 ml of MTMS and 350 mg of benzoyl peroxide (BPO, from the 70% w/w suspension of BPO in water Luperox A70S) was added to the first mixture dropwise. A suspension of microspheres formed, which were separated from the process liquor after 24 h by centrifugation. The resulting material (6 g) was washed extensively with deionized water and dried at 50°C for 3 days.

### EXAMPLE 2 (ACCORDING TO THE PRESENT INVENTION): BPO in MTMS/AmPTMS organosilica microcapsules

The synthesis of fully alkylated organosilica spheres was achieved by mixing 3 ml of 3-aminopropyl trimethoxysilane (AmPTMS) with a solution containing 300 mg of benzoyl peroxide (BPO, from the 70% w/w suspension of BPO in water Luperox A70S) dissolved in 9 ml of methyl trimethoxysilane (MTMS). This solution was emulsified with 150 ml of deionized water by simple magnetic stirring for 24 h at 1000 rpm. A white precipitate formed that was washed extensively with deionized water and dried at 500C for 3 days

### EXAMPLE 3 (COMPARATIVE): BPO in TEOS organosilica microcapsules

Microcapsules made of TEOS containing BPO (= BPO@TEOS) were prepared as follows. 1,33 g of benzoyl peroxide (BPO) was dissolved in 35 ml TEOS. The resulting solution was added with water (200 ml) and surfactant Tween 60 (2 g) and stirred briefly (3 min) and fast with an Ultra-Turrax to cause dissolution of the surfactant. The emulsion thereby obtained was added with 200 ml of aqueous NaOH at pH=11, leaving the mixture under stirring for 24 h after which, it was heated at 50°C for 3 h. A suspension of microparticles readily formed that were separated from the reaction mixture by centrifugation. The white BPO@TEOS sample was washed extensively with absolute ethanol and left to dry at ambient temperature.

The imperviousness to BPO of the MTMS/TEOS microparticles of Example 1, of the MTMS/AmTMS microcapsules of Example 2, and of the TEOS microparticles of Comparative Example 3 were tested by mixing the particles with a monomer mixture ("Backbone") suitable to produce a polyurethane foam formation by polymerization. Backbone was formed by mixing: TFUA - 65%; BFUA - 20%; MFUA - 15%; trifunctional active diluent - 15%; ADR (active diluents ratio) = 0,4). The Backbone stayed first at room temperature for 1 week before adding microcapsules without changes in the viscosity. The experiment with microcapsules was carried out as follows:
1. Preparing the prepolymer (110 g/can) without gas, next adding 4 g/can microcapsules and mixing;
2. Fill the prepolymer in the can, putting the valve only as cover (without its fixing) and leaving the can to stay 72 hours under room temperature (to check for spontaneous release of BPO into the Backbone at absence of gas pressure); Mixing of the particles with the prepolymer mixture occurred smoothly yielding a good distribution of the microcapsules in the froth.
3. Transferring the mixture into a can pressurized at 7 bar, and storing the cans at room temperature.

The MTMS/TEOS as well as the MTMS microcapsules of Examples 1 &2 (according to the present invention) were left in contact with LPG for six months in a pressurized can. and analyzing the liquid mixture for BPO periodically. No BPO was detected in samples of microcapsules according to the present invention withdrawn from the supernatant liquid even after six months. Spraying the resulting mixture at atmospheric pressure resulted in rapid foam formation due to capsule burst and concomitant release of the free radical initiator BPO which catalyzes polymerization of the diffusing monomer/oligomers.

The can containing the TEOS-microcapsules according to Comparative Example 3 rapidly started to release heat, the viscosity increased quickly pointing to incipient polymerization. On the following day, a product was fully cured inside the can. For comparison, the Backbone that was not added with loaded microcapsules did not show any changes.

In conclusion, leaching of the entrapped catalyst BPO out of the TEOS microcapsules took place in the can filled with the microcapsules of Example 2, even without gas pressure. On the other hand, the MTMS/TEOS and MTMS microcapsules according to the present invention did not release any BPO even after a long storing period.

## Claims

1. A pressurized can containing a foam precursor of composition comprising:
• a mixture of monomers/oligomers,
• leach proof microcapsules containing,
∘ hydrophobic active molecules being reactive with the mixture of monomers/oligomers, and
∘ a pressurized liquid or carrier,
wherein the leach-proof microcapsules are defined by a microcapsule shell consisting of a partially or fully alkylated organosilica compound, having an alkylation degree comprised between 2 and 100 mol.%, preferably between 5 and 20 mol.%, more preferably between 8 and 15 mol.%,
wherein the leach-proof microcapsules containing the hydrophobic active molecules and pressurized liquid or carrier are produced and transported under pressure into the pressurized can, and
wherein the microcapsule shells break upon exposure to a positive pressure drop across the inner and outer sides of the shell, 0 < ΔP = Pᵢₙ - Pₒᵤₜ < 5 bar, wherein Pᵢₙ and Pₒᵤₜ are the pressures in, respectively, out of the microcapsule,
**characterized in that,** the pressure in the container is such that the microcapsules shells are stable when stored in the can and break upon dispensing the composition out of the can at ambient pressure such that the hydrophobic active molecules initially contained in the microcapsules contact and react with the mixture of monomers/oligomers of the composition to form a foam.

2. A pressurized can according to claim 1, wherein the microcapsule shell breaks upon exposure to a pressure drop, ΔP, across the inner and outer sides of the shell of at most 1 bar, preferably, at most 0.5 bar, more preferably at most 0.3 bar.

3. A pressurized can according to claim 1 or 2, wherein the foam precursor is a one component polyurethane foam precursor.

4. A pressurized can according to anyone of the preceding claims, wherein the microcapsules are formed by sol-gel micro-encapsulation.

5. A pressurized can according to any of the preceding claims, **characterized in that** the shells of the microcapsules have a hydrophilic-lipophilic balance of maximum 0.1.

6. A pressurized can according to any of the preceding claims, **characterized in that** the hydrophobic active molecules are a polymerization catalyst comprising benzoyl peroxide (BPO).

7. A process for producing a pressurized can according to any of claims 1 to 6 comprising the following steps:
(A) preparing under pressure leach-proof microcapsules containing hydrophobic active molecules by:
(d) dissolving into a solvent (i) the hydrophobic active molecules and (ii) condensable microcapsule components, which comprise an alkyl-modified silane molecule, and (iii) a fully hydrolysable silane;
(e) emulsifying said solution to form an oil in water (O/W) emulsion.
(f) treating the emulsion of step (e) with a condensation catalyst to form leach-proof organically modified silica microcapsules enclosing the hydrophobic active molecules,
(B) transporting under pressure to and dispersing within a pressurized vessel the leach-proof organically modified silica microcapsules obtained in step (A) in a mixture of monomers/oligomers reactive with the hydrophobic active molecules enclosed in the microcapsules.

8. A process according to claim 7, wherein the fully hydrolysable silane is an aminopropyl-modified silane, and wherein the O/W emulsion is preferably prepared in the absence of any surfactant or mediating reagent.

9. A process according to claim 7 or 8, wherein the mixture of monomers/oligomers is contained in a solvent containing the reactive components in the form of monomers.

10. A process according to any of claims 7 to 9, wherein the microcapsules are prepared in liquefied petroleum gas (LPG).

11. A process according to any of claims 7 to 10, wherein the alkyl-modified silane is an alkyl alkoxysilane, preferably methyl trimethoxysilane (MTMS), diethyl diethoxysilane (DEDES), or triethyl methoxysilane (TEMS).

## Patentansprüche

1. Druckdose, enthaltend einen Schaumvorläufer einer Zusammensetzung, die umfasst:
• ein Gemisch aus Monomeren/Oligomeren
• auslaugbeständige Mikrokapseln, enthaltend
o hydrophobe aktive Moleküle, die mit dem Gemisch aus Monomeren/Oligomeren reaktionsfähig sind, und
o eine(n) unter Druck stehende(n) Flüssigkeit oder Träger,
wobei die auslaugbeständigen Mikrokapseln durch eine Mikrokapselschale definiert sind, die aus einer teilweise oder vollständig alkylierten organischen Siliciumdioxid-Verbindung bestehen, die einen Alkylierungsgrad im Bereich zwischen 2 und 100 Mol-%, bevorzugt zwischen 5 und 20 Mol-%, noch stärker bevorzugt zwischen 8 und 15 Mol-% besitzt,
wobei die auslaugbeständigen Mikrokapseln, die die hydrophoben aktiven Moleküle und die/den unter Druck stehende(n) Flüssigkeit oder Träger enthalten, unter Druck hergestellt und in die Druckdose befördert werden, und
wobei die Mikrokapselschalen bei Exposition gegenüber einem positiven Druckabfall über die Innen- und Außenseiten der Schale, 0 < ΔP = Pᵢₙ - Pₒᵤₜ < 5 Bar, brechen, wobei Pᵢₙ und Pₒᵤₜ die Drücke innerhalb beziehungsweise außerhalb der Mikrokapsel sind,
**dadurch gekennzeichnet, dass** der Druck in dem Behälter derart ist, dass die Mikrokapselschalen stabil sind, wenn in der Dose gelagert, und bei Ausgeben der Zusammensetzung aus der Dose bei Umgebungsdruck brechen, derart, dass die zunächst in den Mikrokapseln enthaltenen hydrophoben aktiven Moleküle mit dem Gemisch aus Monomeren/Oligomeren der Zusammensetzung in Berührung kommen und reagieren, um einen Schaum zu bilden.

2. Druckdose nach Anspruch 1, wobei die Mikrokapselschale bei Exposition gegenüber einem Druckabfall, ΔP, über die Innen- und Außenseiten der Schale von höchstens 1 Bar, bevorzugt höchstens 0,5 Bar, noch stärker bevorzugt höchstens 0,3 Bar brechen.

3. Druckdose nach Anspruch 1 oder 2, wobei der Schaumvorläufer ein Einkomponenten-Polyurethanschaumvorläufer ist.

4. Druckdose nach einem der vorhergehenden Ansprüche, wobei die Mikrokapseln durch Sol-Gel-Mikroverkapselung gebildet werden.

5. Druckdose nach einem der vorhergehenden Ansprüche, **dadurch gekennzeichnet, dass** die Schalen der Mikrokapseln ein hydrophil-lipophiles Gleichgewicht von maximal 0,1 besitzen.

6. Druckdose nach einem der vorhergehenden Ansprüche, **dadurch gekennzeichnet, dass** die hydrophoben aktiven Moleküle ein Polymerisationskatalysator sind, der Benzoylperoxid (BPO) umfasst.

7. Verfahren zur Herstellung einer Druckdose nach einem der Ansprüche 1 bis 6, umfassend die folgenden Schritte:
(A) Zubereiten, unter Druck, von auslaugbeständigen, hydrophobe aktive Moleküle enthaltenden Mikrokapseln durch:
(d) Auflösen, in einem Lösungsmittel, von (i) den hydrophoben aktiven Molekülen und (ii) kondensierbaren Mikrokapselkomponenten, die ein alkylmodifiziertes Silanmolekül umfassen, und (iii) einem vollständig hydrolysierbaren Silan;
(e) Emulgieren der Lösung, um eine Öl-in-Wasser- (O/W) Emulsion zu bilden,
(f) Behandeln der Emulsion aus Schritt (e) mit einem Kondensationskatalysator, um auslaugbeständige, organisch modifizierte Siliciumdioxid-Mikrokapseln zu bilden, die die hydrophoben aktiven Moleküle umschließen,
(B) Befördern, unter Druck, zu, und Dispergieren innerhalb eines Druckbehälters, der in Schritt (A) erhaltenen auslaugbeständigen organisch modifizierten Siliciumdioxid-Mikrokapseln in einem Gemisch aus Monomeren/Oligomeren, das mit den in den Mikrokapseln umschlossenen hydrophoben aktiven Molekülen reaktionsfähig ist.
I

8. Verfahren nach Anspruch 7, wobei das vollständig hydrolysierbare Silan ein aminopropylmodifiziertes Silan ist, und wobei die O/W-Emulsion bevorzugt in Abwesenheit von jeglichem Tensid oder Vermittlungsreagenz zubereitet wird.

9. Verfahren nach Anspruch 7 oder 8, wobei das Gemisch aus Monomeren/Oligomeren in einem Lösungsmittel enthalten ist, das die reaktionsfähigen Komponenten in der Form von Monomeren enthält.

10. Verfahren nach einem der Ansprüche 7 bis 9, wobei die Mikrokapseln in verflüssigtem Erdölgas (LPG) zubereitet werden

11. Verfahren nach einem der Ansprüche 7 bis 10, wobei das alkylmodifizierte Silan ein Alkylalkoxysilan, bevorzugt Methyltrimethoxysilan (MTMS), Diethyldiethoxysilan (DEDES), oder Triethylmethoxysilan (TEMS) ist.

## Revendications

1. Boîte sous pression contenant un précurseur de mousse de composition comprenant :
• un mélange de monomères/oligomères,
• des microcapsules étanches aux lessivages, contenant
o des molécules actives hydrophobes réactives avec le mélange de monomères/oligomères et
o un liquide ou excipient sous pression,
dans laquelle les microcapsules étanches aux lessivages sont définies par une coque de microcapsule constituée d'un composé d'organosilice partiellement ou totalement alkylé, ayant un degré d'alkylation compris entre 2 et 100 % en moles, de préférence entre 5 et 20 % en moles, de manière davantage préférée entre 8 et 15 % en moles,
dans laquelle les microcapsules étanches aux lessivages contenant les molécules actives hydrophobes et le liquide ou excipient sous pression sont produits et transportés sous pression dans la boîte sous pression, et
dans laquelle les coques de microcapsules se rompent après exposition à une chute de pression positive à travers les côtés interne et externe de la coque, 0 < ΔP = Pᵢₙ - Pₒᵤₜ < 5 bars, où Pᵢₙ et Pₒᵤₜ sont les pressions dans, et respectivement hors de la microcapsule,
**caractérisée en ce que** la pression dans le récipient est telle que les coques de microcapsules sont stables lorsqu'elles sont stockées dans la boîte et qu'elles se rompent lors de la distribution de la composition hors de la boîte, à la température ambiante, de sorte que les molécules actives hydrophobes initialement contenues dans les microcapsules entrent en contact et réagissent avec le mélange de monomères/oligomères de la composition pour former une mousse.

2. Boîte sous pression selon la revendication 1, dans laquelle la coque de microcapsule se rompt lors de l'exposition à une chute de pression, ΔP, à travers les côtés interne et externe de la coque d'au plus 1 bar, de préférence, au plus 0,5 bar, de manière davantage préférée d'au plus 0,3 bar.

3. Boîte sous pression selon la revendication 1 ou 2, dans laquelle le précurseur de mousse est un précurseur de mousse de polyuréthane mono-composant.

4. Boîte sous pression selon l'une quelconque des revendications précédentes, dans laquelle les microcapsules sont formées par micro-encapsulation sol-gel.

5. Boîte sous pression selon l'une quelconque des revendications précédentes, **caractérisée en ce que** les coques des microcapsules ont un équilibre hydrophile-lipophile de 0,1 au maximum.

6. Boîte sous pression selon l'une quelconque des revendications précédentes, **caractérisée en ce que** les molécules actives hydrophobes sont un catalyseur de polymérisation comprenant du peroxyde de benzoyle (BPO).

7. Procédé de production d'une boîte sous pression selon l'une quelconque des revendications 1 à 6, comprenant les étapes suivantes .
(A) préparation sous pression de microcapsules étanches aux lessivages contenant des molécules actives hydrophobes en :
(d) dissolvant dans un solvant (i) les molécules actives hydrophobes et (ii) des composants de microcapsule condensables, qui comprennent une molécule de silane à modification alkyle, et (iii) un silane totalement hydrolysable ;
(e) émulsionnant ladite solution pour former une émulsion huile dans l'eau (H/E).
(f) traitant l'émulsion de l'étape (e) avec un catalyseur de condensation pour former des microcapsules de silice organiquement modifiée, étanches aux lessivages, comprenant les molécules actives hydrophobes,
(B) transport sous pression vers un récipient sous pression et dispersion dans celui-ci des microcapsules de silice organiquement modifiée, étanches aux lessivages, obtenues à l'étape (A) dans un mélange de monomères/oligomère réactif avec les molécules actives hydrophobes contenues dans les microcapsules.

8. Procédé selon la revendication 7, dans lequel le silane totalement hydrolysable est un silane à modification aminopropyle, et dans lequel l'émulsion H/E est de préférence préparée en l'absence de tout tensioactif ou agent médiateur.

9. Procédé selon la revendication 7 ou 8, dans lequel le mélange de monomères/oligomères est contenu dans un solvant contenant les composants réactifs sous la forme de monomères.

10. Procédé selon l'une quelconque des revendications 7 à 9, dans lequel les microcapsules sont préparées dans du gaz de pétrole liquéfié (GPL).

11. Procédé selon l'une quelconque des revendications 7 à 10, dans lequel le silane à modification alkyle est un alkyl-alcoxysilane, de préférence un méthyl-triméthoxysilane (MTMS), un diéthyl-diéthoxysilane (DEDES) ou un triéthyl-méthoxysilane (TEMS).
